# EUROPÄISCHE PATENTSCHRIFT

(11) **EP 1 648 244 B1**
(45) Veröffentlichungstag und Bekanntmachung des Hinweises auf die Patenterteilung: **02.03.2011**
(21) Anmeldenummer: 04763662.6
(22) Anmeldetag: 30.07.2004
(51) Int. Cl.: A23G 3/26, A23P 1/08, A61J 3/00

(54) **VERFAHREN UND VORRICHTUNG ZUM KONTINUIERLICHEN BESCHICHTEN VON KERNEN MIT EINER DRAGIERVORRICHTUNG**
METHOD AND DEVICE FOR THE CONTINUOUS COATING OF CORES BY MEANS OF A DRAGEE-MAKING APPARATUS
PROCEDE ET DISPOSITIF D'ENROBAGE CONTINU D'AMANDES AVEC UN DISPOSITIF DE DRAGEIFICATION

(30) Priorität: 01.08.2003 DE 10335411; 28.01.2004 DE 102004004470
(43) Veröffentlichungstag der Anmeldung: 26.04.2006
(73) Patentinhaber: Driam Anlagenbau GmbH, 88097 Eriskirch/B. (DE)
(72) Erfinder: DUNAJTSCHIK, Rudolf, 88046 Friedrichshafen (DE); NOHYNEK, Oliver, 9000 St. Gallen (CH)
(74) Vertreter: Riebling, Peter
(86) Internationale Anmeldenummer: PCT/EP2004/008582
(87) Internationale Veröffentlichungsnummer: WO 2005/011398

(56) Entgegenhaltungen:
- EP-A- 0 185 316
- WO-A-94/18858
- DE-A- 2 129 740
- DE-A- 2 324 946
- GB-A- 1 301 810
- US-A- 1 757 234
- US-A- 3 952 757

## Beschreibung

Die Erfindung betrifft ein Verfahren und eine Vorrichtung zum kontinuierlichen Beschichten von Kernen mit einer Dragiervorrichtung nach dem Oberbegriff des Patentanspruchs 1.

Grundsätzlich werden in der Dragier-Technologie zwei verschiedene Verfahrensformen unterschieden.

Die erste Verfahrensform betrifft ein kontinuierliches Dragierverfahren, bei dem das zu behandelnde Produkt an der Eingangsseite einer drehenden Trommel eingespeist wird und durch drehfest an der Innenwand der Trommel befestigte Förderstege in Richtung auf die Ausgangsseite gefördert wird.

Der sich in der Trommel befindliche Produktstrom wird insgesamt stets mit jeweils einem einzigen Bearbeitungsschritt bearbeitet, wobei mehrere Bearbeitungsschritte zeitlich hintereinanderfolgend ablaufen. Hierbei wird durch Drehen der Trommel das Produkt mit konstanter Förderung von der Einlaufseite zur Auslaufseite gefördert.

Vorteil des bekannten Dragierverfahrens ist ein kontinuierlicher Durchlauf des Produktstromes. Geht es hingegen darum, dass nur relativ geringe Produktmengen behandelt werden sollen, dann ist dieses kontinuierlichen Durchlaufverfahren teuer und aufwendig. Außerdem sind die Auftragsmengen bei einem Durchlauf sehr begrenzt.

Bei einem zweiten bekannten Dragierverfahren handelt es sich um eine diskontinuierliche Betriebsweise. Dabei wird eine einzelne Charge in eine Trommel eingeführt und dort einem bestimmten Behandlungsablauf unterworfen. Die Behandlung erfolgt in relativ kleinvolumigen Kesseln.

Nach Beendigung des Behandlungsschrittes wird die Charge entleert und in eine weitere Trommel eingeleitet, wo der nächste Behandlungsschritt stattfindet.

Bei dieser schrittweisen Bearbeitung der Charge in verschiedenen, hintereinander folgend angeordneten, Trommeln ist ein hoher Maschinenaufwand gegeben.

Um die Durchlaufzeiten zu verkürzen ist es bei diesem bekannten Batch-Verarbeitungsverfahren bekannt, mehrere Trommeln am Umfang eines Rundtisches anzuordnen und dem Rundtisch gegenüberliegend eine Anzahl von gehäusefesten Bearbeitungsstationen zuzuordnen.

Die jeweilige Trommel mit der darin lagernden Charge wird dann durch Drehung des Rundtisches unter die jeweilige Bearbeitungsstation gebracht, wo sie einem Behandlungsschritt unterworfen wird.

Nach Beendigung dieses Behandlungsschrittes wird der Rundtisch weitergedreht, und die nächste Trommel kommt in Eingriff mit der zugeordneten Behandlungsstation.

Dieses Stapelverfahren ist besonders dann aufwendig, wenn eine Vielzahl von Bearbeitungsschritten notwendig sind, weil eine große Anzahl von Trommeln auf einem Rundtisch angeordnet werden müssen. Vorteil dieses Verfahrens ist jedoch, dass auch kleine Einzelchargen gut bearbeitet werden können.

Mit dem Gegenstand der DE 23 24 946 A ist ein Verfahren und eine Vorrichtung zum Umhüllen von Drageekernen mit mehreren Feststoffschichten mit den Merkmalen des Oberbegriffs des Patentanspruches 1 bekannt geworden.

Es sich um eine Beschichtungsmaschine zur Umhüllung von Drageekernen, die im Wesentlichen aus mehreren hintereinander angeordneten und im Abstand voneinander angeordneten Kesseln besteht, die von einem gemeinsamen Versorgungsrohr durchgriffen sind und auf diesem drehbar und abgedichtet gelagert sind.

Der Übergang von der jeweiligen Schleuse in den Kessel erfolgt durch sektorförmige Öffnungen, die je nach Drehstellung der Schleuse und des jeweiligen Kessels in Übereinstimmung gebracht werden.

Ist beispielsweise eine sektorförmige Öffnung in einem Kessel in fluchtender Übereinstimmung zu einer sektorförmigen Öffnung an der daran anschließenden Schleuse, rutscht das Material bedingt durch Schwerkraft von der Schleuse über diese sektorförmige Öffnung in der Schleuse in den daran anschließenden Kessel.

Sobald die Schleuse dann um einen bestimmten Taktschritt gedreht wurde, kann kein weiteres Material aus der Schleuse in den nachgeschalteten Kessel nachrutschen. In diesem Kessel findet dann ein bestimmter Behandlungsschritt statt.

Die gesamte Anordnung wird von einem zentralen, drehfest angeordnetem Versorgungsrohr durchgriffen, was einen hohen maschinentechnischen Aufwand erfordert, denn das Versorgungsrohr ist das Drehlager und gleichzeitig auch die Abdichtung zu den sogenannten Beschleunigungsrohren in den Kesseln.

Die beiden Kessel sind mit Stangen drehfest miteinander verbunden und drehen gemeinsam.

Wesentlicher Nachteil der genannten Anordnung ist, dass ein hoher maschinentechnischer Aufwand gegeben ist, denn es sind Drehlager auf dem zentralen Versorgungsrohr notwendig, die gleichzeitig eine Abdichtung zu dem jeweiligen Kessel und der zugeordneten drehbar darauf gelagerten Schleuse erfordern.

Der Erfindung liegt deshalb ausgehend von dem ersten beschriebenen Verfahren die Aufgabe zugrunde, ein Verfahren und eine Vorrichtung zum kontinuierlichen Beschichten von Kernen mit einer Dragiervorrichtung so weiterzubilden, dass auch relativ kleine Einzelchargen auf engem Raum mit geringem Maschinenaufwand bearbeitet werden können.

Zur Lösung der gestellten Aufgabe ist die Erfindung durch das Verfahren nach der technischen Lehre des Anspruchs 1 gekennzeichnet.

Wesentliches Merkmal der Erfindung ist, dass die Vorteile eines kontinuierlichen Durchlaufverfahrens beibehalten werden und dennoch es erstmals möglich ist, relativ kleine Einzelchargen individuell in voneinander getrennten Behandlungskammern in der sich drehenden Trommel voneinander abzuteilen und auch individuell zu behandeln.

Der Erfindung liegt zugrunde, dass die Durchlaufbewegung mittels einer von der Drehbewegung der Trommel entkoppelten Wendel realisiert wird. Diese dreht sich so getaktet, dass die Wendel gewährleistet, dass die Produkte in den einzelnen Stationen innerhalb der Röhre beliebig lang verbleiben können und keine ungewünschte Längsbewegung durchgeführt wird. Die Wendel wird nur dann in Bewegung gesetzt, wenn die Produkte einer weiteren Bearbeitungsstation innerhalb der Röhre zugeführt werden sollen.

Die zu behandelnden Produkte rotieren ständig in der sich drehenden Trommel, ohne dass ein Transport in Längsrichtung stattfindet. Erst der in der Trommel angeordnete Längsförderer bringt das Produkt von der einen Behandlungsstation in die nächste.

Vorteil dieser Erfindung ist, dass die Verweilzeit der Produkte beliebig verlängert werden kann und die Beeinflussung des Prozesses viel individueller realisiert werden kann als bei bisherigen konventionellen Dragierröhren, bei denen die Beeinflussung des Prozesses schwierig und nur in engen Grenzen möglich ist.

Bei der vorliegenden Erfindung besteht der wesentliche Vorteil hingegen, dass keinerlei Schleusen zwischen den einzelnen Kesseln (Behandlungskammern) notwendig sind, weil der Übergang von der einen Behandlungskammer in die andere vollkommen frei durch einen dazwischen angeordneten Längsförderer zugänglich ist.

Dies ist ein wesentlicher Unterschied zur oben genannten Druckschrift, die einlaufseitig und auslaufseitig jedes Kessels eine raumgreifende Schleuse anordnen muss.

Damit gibt es bei der vorliegenden Erfindung keine unerwünschten Puffer und Speicherräume zwischen den einzelnen Behandlungskesseln.

Bei der genannten Druckschrift sind mehrere hintereinandergeschaltete und im Abstand voneinander angeordnete, jedoch drehfest über zugeordnete Überbrückungsglieder miteinander verbundene Kessel notwendig. Dies ist bei der Erfindung nicht der Fall. Hier ist ein einziger Kessel vorhanden, in dessen Innenraum eine entsprechende Unterteilung in einzelne Behandlungskammern stattfindet.

Es ergeben sich daher folgende Vorteile:
1. Ein von der Drehbewegung der Trommel entkoppelter Längsförderer (z.B. eine Wendel) fördert taktweise das Material in axialer Richtung durch die Trommel. Bevorzugt wird ein derartiger Längsförderer als Transportwendel oder auch als umlaufendes Trum ausgebildet.
2. Je nach Anzahl der Förderglieder des Längsförderers, welche die Bearbeitungsstationen in der Trommel definieren, können beliebig viele Bearbeitungsstationen in der Trommel angeordnet werden.
3. Je nach Abstand der einzelnen Förderglieder zueinander (Steigung der Transportwendel) sind die Bearbeitungsstationen verschiebbar und auch einstellbar.

Es kann sogar vorgesehen sein, dass die Transportwendel über ihre Länge gesehen unterschiedliche Steigungen aufweist, so dass beispielsweise an der Eingangsseite der Trommel ein relativ breites und großflächiges Bett für die zu behandelnden Kerne in einer Behandlungskammer gebildet wird und mit Förderung dieses Gutes in Richtung auf die Ausgangsseite der Trommel dieses Bett in der Fläche verkleinert wird, wodurch zwangsläufig auch die Schütthöhe vergrößert wird. Damit hat die Transportwendel über ihre Länge gesehen unterschiedliche Steigungen.
4. Es kann vorgesehen sein, mehr als einen in axialer Richtung angetriebenen Längsförderer durch die Trommel laufen zu lassen. Als bevorzugtes Beispiel kann angegeben werden, dass zwei unabhängig drehend angetriebene Transportwendeln in der Trommel vorhanden sind, wobei im Zwischenraum zwischen den beiden Wendeln das von der einen, vorderen Wendel bearbeitete Gut in die Eingangsseite der zweiten, sich daran anschließenden Wendel übergeben wird.
5. Die Trommel wird bevorzugt auf Rollen gelagert und angetrieben.
6. Die Medienzufuhr der Behandlungsmedien ist von beiden Seiten der Trommel her in die einzelnen, individuellen Behandlungskammern innerhalb der Trommel möglich.
7. Es kann vorgesehen sein, dass einige oder mehrere Behandlungsstationen an einem gehäusefesten Schlitten angeordnet sind, der in axialer Richtung zur Trommel bewegbar ist, so dass die Behandlungsstationen in die Trommel hinein und aus der Trommel herausfahrbar ausgebildet sind.
8. Als weiterer Vorteil ist die leichte Reinigung der Trommel zu erwähnen: Dadurch, dass die Transportwendel (als separates Teil) vollständig aus der Trommel entfernt werden kann, ist der Innenraum der Trommel besonders einfach zu reinigen, denn er ist dann frei von Einbauten.
9. Die zu behandelnden Kerne verbleiben bei stillstehender Transportwendel und sich drehender Trommel beliebig lange in der jeweiligen Bearbeitungsstation und werden dort durch die dort angeordneten Bearbeitungsstationen behandelt. Bei sich drehender Trommel erfolgt so eine besonders gründliche Bearbeitung des Gutes in der Bearbeitungsstation. Dies ist ein wesentlicher Vorteil gegenüber der eingangs erwähnten Mischtrommel, bei der pro Drehung der Trommel das Gut zwangsläufig in axialer Richung gefördert wird, ohne dass das Gut an einer Stelle der Trommel länger verbleiben kann.

Mit der gegebenen technischen Lehre wird nun erstmals eine sinnvolle Verbindung zwischen dem kontinuierlichen Durchlaufverfahren und dem Chargenverarbeitungsbetrieb vorgeschlagen.

Der einfacheren Beschreibung wegen wird der vorher beschriebene Längsförderer nun in seiner Ausgestaltung als Transportwendel beschrieben. Dies beschränkt jedoch nicht den Schutzbereich der Erfindung, denn in den Schutzbereich der Erfindung fallen sämtliche bekannten Längsförderer, die in der Lage sind, zwischen den einzelnen Fördergliedern funktionell voneinander getrennte Behandlungskammern für die Aufnahme von Einzelchargen des zu behandelnden Gutes zu bilden.

Gegenüber einer konventionellen, kontinuierlich arbeitenden, Anlage wird demgemäss das Produktbett in mehrere Einzelchargen zerlegt und durchläuft mittels der getakteten Transportwendel die Trommel in Form von mehreren kleinen Chargen. Somit muss die Transportwendel auch unabhängig von dem Drehantrieb des Trommelzylinders gelagert sein. Der Auftrag der einzelnen Überzugsmaterialien erfolgt an dafür frei wählbaren Positionen mit frei wählbarem Mengenauftrag im Bereich der durch die Transportwendel gebildeten einzelnen Behandlungskammern.

An den einzelnen Positionen werden z. B. die Prozess-Schritte "Sprühen", "Einlaufen und Verteilen" und "Abstreuen" durchgeführt.

Wesentlicher Vorteil des neuartigen Verfahrens ist die bessere Beeinflussung des Prozesses der Weichdragierung während des Bearbeitungsablaufes. Während beim bisherigen Prozess teilweise ergänzende Prozess-Schritte manuell getätigt werden mussten, ist die Einstellung des Ablaufs bei dem erfindungsgemäßen Verfahren in viel größeren Bereichen möglich.

Die Trommel sollte möglichst auf einer Rollenlagerung drehbar gelagert sein, und der Antrieb kann entweder über die Rollen oder aus Drehmomenten über eine umlaufende Kette oder einen umlaufenden Zahnriemen erfolgen, der den Außenumfang der Trommel umspannt.

Für die Drehlagerung der Transportwendel werden zwei verschiedene Ausführungsformen vorgeschlagen.

In einer ersten Ausführungsform wird vorgeschlagen, dass das Drehlager der Transportwendel aus einem Lagerstern besteht, der drehbar an der Trommel selbst gelagert ist, so dass stets dafür gesorgt ist, dass die Transportwendel koaxial zur Trommel läuft.

In einer anderen Ausgestaltung kann es jedoch auch vorgesehen sein, dass die Transportwendel drehfest mit einer Welle verbunden ist, welche koaxial zur Trommel verläuft und die Trommel durchsetzt, wobei die Welle auf gehäusefesten Lagern drehbar gelagert ist.

Es ist ein geringer Abstand zwischen dem Außenumfang der Transportwendel und dem Innenumfang der Trommel anzustreben.

Beispielsweise ist bei einem Durchmesser von zu behandelnden Kernen im Bereich zwischen 15 und 20 mm ein Spalt zwischen Trommel und dem Außenumfang der Wendel von etwa 1 mm anzustreben.

Selbstverständlich ist die Erfindung nicht auf die angegebenen Dimensionen beschränkt. Es sollte nur vermieden werden, dass die zu behandelnden Kerne im Spalt zwischen der Trommel und der unabhängig davon gelagerten Transportwendel beschädigt werden.

Es kann auch vorgesehen werden, dass am Außenumfang der Transportwendel Abstreif- oder Dichtungsleisten vorhanden sind, die sich an der Innenseite der Trommel anlegen. Auf diese Weise wird beim Drehantrieb der Transportwendel gleichzeitig noch die Trommel-Innenwandung gereinigt. Derartige Dichtungsleisten können aus Profilleisten, aus einem elastomeren Material, aus Bürstenleisten oder auch aus einem Luftvorhang gebildet sein.

Es kann auch vorgesehen sein, dass die Transportwendel über ihre Länge gesehen in der ersten Hälfte eine kleinere Steigung aufweist, während in der zweiten Hälfte eine größere Steigung vorgesehen ist. Auf diese Weise wird der Transportweg des Produktes beim Drehantrieb der Transportwendel beeinflusst.

Vorstehend wurde ein Verfahren beschrieben, das sich dadurch auszeichnet, dass die Vorteile eines kontinuierlichen Durchlaufverfahrens beibehalten werden und es dennoch möglich ist, relativ kleine Einzelchargen individuell in voneinander getrennten Behandlungskammern in der sich drehenden Trommel voneinander abzuteilen und damit auch individuell zu behandeln.

Im Folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematisiert eine Dragiervorrichtung nach der Erfindung mit einem Längsförderer als Transportwendel,
- Figur 2:: schematisiert die Transportwendel unter Weglassung der Trommel
- Figur 3:: eine zweite Ausführungsform eines Längsförderers als umlaufendes Trum,
- Figur 4:: schematisiert die erste Ausführungsform der Dragiervorrichtung,
- Figur 5:: die Stirnansicht einer Dragiervorrichtung nach Figur 4,
- Figur 6:: die gegenüberliegende Stirnansicht der Dragiervorrichtung nach Figur 5,
- Figur 7:: schematisiert die Dragiervorrichtung mit einer ersten Ausführungsform der Lagerung der Transportwendel,
- Figur 8:: die Ausführungsform nach Figur 7 mit Darstellung weiterer Einzelheiten,
- Figur 9:: eine gegenüber Figur 7 abgewandelte Ausführungsform,

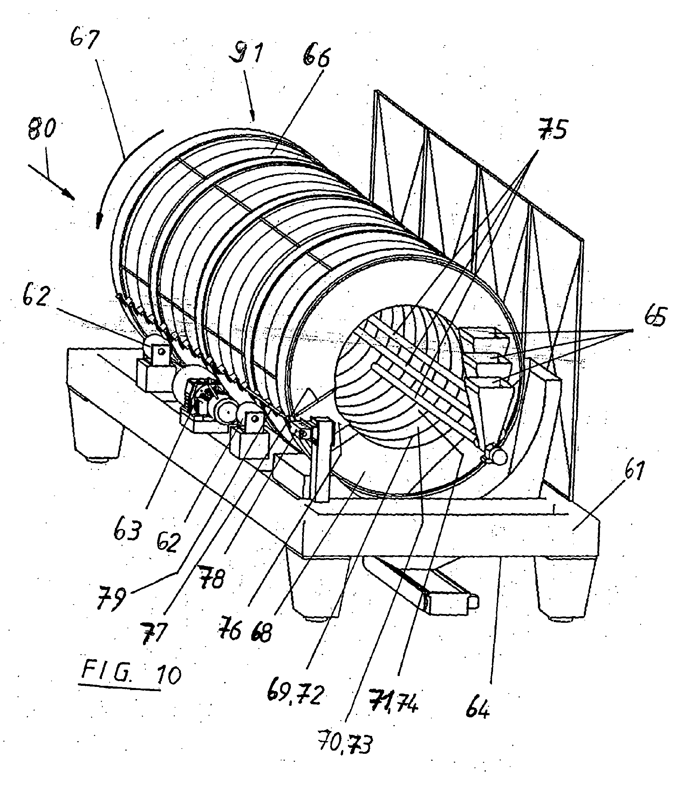

- Figur 10:: schematisiert die Darstellung einer Trommel von der Austragseite her gesehen

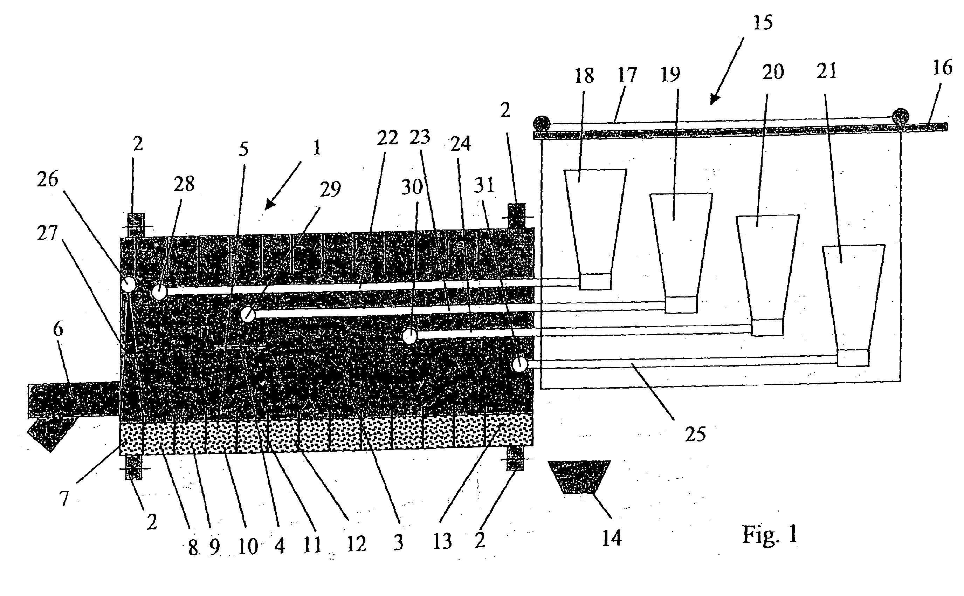

In Figur 1 ist allgemein eine drehend angetriebene Trommel 1 dargestellt, an deren Außenumfang Rollenlager 2 angeordnet sind, welche das Drehlager für die Trommel bilden. Der Drehantrieb der Trommel ist nicht dargestellt.

Lediglich schematisiert ist ein Längsförderer 3 dargestellt, der in Pfeilrichtung 4 das an der Eingangsseite über ein Einführband 6 eingeführte Produkt 5 in einer Anzahl von Einzelchargen aufteilt.

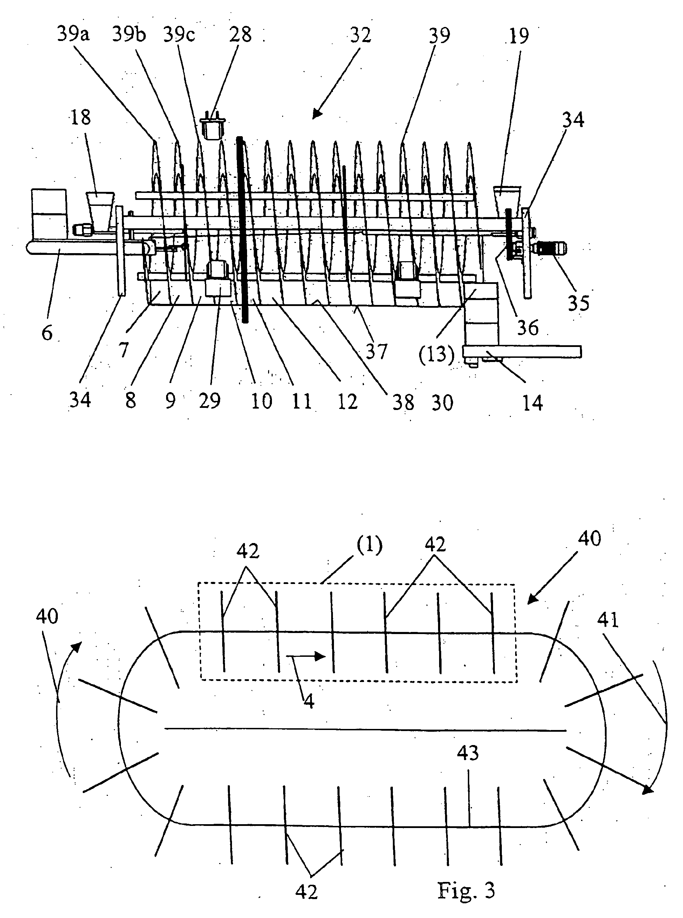

Der Längsförderer 3 ist deshalb nur schematisiert dargestellt, weil nur einzelne, parallel zueinander angeordnete, Förderglieder dargestellt sind. Dies soll versinnbildlichen, dass der Längsförderer 3 entweder als Transportwendel 32 nach Figur 2 oder als umlaufendes Trum (Scheibenförderer 40) nach Figur 3 ausgebildet sein kann.

Es wird im übrigen jede Art von Längsförderer 3 von der Erfindung beansprucht, der in der Lage ist, zwischen seinen Fördergliedern funktionell voneinander getrennte Behandlungskammern 7 - 13 auszubilden.

Das Produkt 5 wird als Einzelcharge über das Einführband 6 in die erste Behandlungskammer 7 eingeführt, wo es beispielsweise mittels eines Sprühkegels 27 von einem Behandlungskopf 26 behandelt wird. Die Trommel 1 dreht sich während der Bearbeitung, während der Längsförderer 3 stillsteht.

Nach Ablauf der erforderlichen Behandlungszeit in der Behandlungskammer 7 wird der Längsförderer 3 (bei stehender oder auch bei drehender) Trommel 1 eingeschaltet und fördert mit seinem Förderglied das in der Behandlungskammer 7 fertig behandelte Produkt in die sich daran anschließende Behandlungskammer 8.

Damit wird die Behandlungskammer 7 frei, und über das Einführband 6 wird eine neue Charge in die Behandlungskammer 7 eingeführt.

In der Behandlungskammer 8 kann das Produkt beispielsweise über den Behandlungskopf 28 einer weiteren Behandlung unterzogen werden, wobei beispielsweise über eine Versorgungsleitung 22, die am Auslauf eines Silobehälters 18 angeordnet ist, eine Überzugsmasse an den Behandlungskopf 28 herangeführt wird.

Die Einzelcharge wird nun in der Behandlungskammer 8 entsprechend weiter bearbeitet, während in der Behandlungskammer 7 die über das Einführband 6 eingespeiste weitere Charge der vorher beschriebenen Behandlung unterzogen wird.

Sind beide Behandlungen in den Behandlungskammern 7 und 8 abgeschlossen, dann wird der Längsförderer wiederum um einen Takt in Pfeilrichtung 4 bewegt, wodurch sich die Vorderglieder in axialer Richtung durch die Trommel 1 verschieben, und das vorher in der Behandlungskammer 8 befindliche Produkt gelangt nun in die sich daran anschließende Behandlungskammer 9. Dort wird das Produkt beispielsweise nur durchgemischt, weil dieser Behandlungskammer 9 kein Behandlungskopf zugeordnet ist.

Gleichzeitig wird über das Einführband 6 wiederum ein neues Produkt in die Behandlungskammer 7 eingefüllt und das vorher in der Behandlungskammer 7 gewesene Produkt wird in die Behandlungskammer 8 gefördert.

Auf diese Weise gelangt jede Einzelcharge taktweise in jede Behandlungskammer 7 - 13, und in bestimmten Behandlungskammern (z. B. der Behandlungskammer 12 und weiteren erfolgt eine entsprechende weitere Beschichtung oder Behandlung des Produktes mit einem dieser Behandlungskammer zugeordneten Behandlungskopf 29.

Den weiter hinten gelegenen Behandlungskammern sind dann noch weitere Behandlungsköpfe 30, 31 zugeordnet, wobei jeder Behandlungskopf 28 - 31 über eine zugeordnete Versorgungsleitung 22 - 25 mit einem zugeordneten Silobehälter 18 - 21 verbunden sind.

Nach dem gezeigten Ausführungsbeispiel sind alle Bearbeitungsstationen an einem Fahrwagen 17 angeordnet, der an einem gehäusefesten Gestell 16 verschiebbar gelagert ist. Die gesamte Behandlungsvorrichtung 15 ist damit aus der Trommel 1 heraus fahrbar oder einführbar.

Dank der Verschiebbarkeit der Behandlungsvorrichtung 15 kann somit wahlweise eine Behandlung auch in unterschiedlichen Behandlungskammern stattfinden. Erfolgte jetzt beispielsweise eine Behandlung in den Behandlungskammern 8, 12 und so weiter, kann durch Verschieben der Behandlungsvorrichtung 15 nun eine Behandlung des Produkts in den Behandlungskammern 9 oder 10 mit dem Behandlungskopf 28 stattfinden, während der Behandlungskopf 29 zwei Behandlungskammern weiter nach hinten verschoben wird.

Am Auslauf der Trommel 1 ist in an sich bekannter Weise ein Behälter 14 angeordnet, der das aus der Behandlungskammer 13 herauslaufende Produkt aufnimmt und einer weiteren Bearbeitung zuführt. Der Behälter 14 wird somit taktweise mit der Verschiebung des Längsförderers 3 in Pfeilrichtung 4 befüllt.

Die Figur 2 zeigt als Ausführungsbeispiel für einen derartigen Längsförderer 3, dass dieser nun als Transportwendel 32 ausgebildet ist. Die Transportwendel 32 ist drehfest mit einer mittigen Welle verbunden, welche sich durch die Trommel 1 erstreckt.

Der Übersichtlichkeit wegen ist die Trommel 1 weggelassen. Damit ist dargestellt, dass zwischen den einzelnen Wendelspitzen 39a - c die vorher beschriebenen Behandlungskammern 7 - 13 und dem Innenumfang der Trommel 1 ausgebildet werden.

Die Welle ist hierbei in zwei außerhalb der Trommel 1 angeordneten Lagern 34 drehbar aufgenommen und wird über einen Antrieb 35 und ein daran angeflanschtes Getriebe 36 drehend angetrieben.

Lediglich als Strich ist der Trommelboden 37 der Trommel 1 zeichnerisch dargestellt.

Zwischen dem Trommelboden 37 und der jeweiligen Wendelspitze 39 ergibt sich somit ein Drehspalt 38.

Die Figur 3 zeigt eine andere Ausführungsform eines Längsförderers 3, der als Scheibenförderer 40 ausgebildet ist.

Die Trommel 1 ist lediglich schematisiert dargestellt, ebenso wie die einzelnen Scheiben 42 des Scheibenförderers 40, die in Pfeilrichtung 4 durch die Trommel 1 hindurch bewegbar sind und die beispielsweise parallel und in gegenseitigem Abstand an einem Verbindungsstrang 43 befestigt sind. Damit ist der Scheibenförderers 40 als umlaufendes Trum ausgebildet, welches in den Pfeilrichtungen 41 umläuft und die jeweiligen Scheiben 42 parallel und in gegenseitigem Abstand durch die Trommeln 1 in Pfeilrichtung 4 hindurchlaufen lässt.

Die Scheiben sind demzufolge nicht drehbar, sondern werden in axialer Richtung durch die Trommel hindurchgeschoben oder -gezogen. Sie müssen nicht den gesamten Durchmesser der Trommel ausfüllen. Es reicht auch aus, jeweils nur eine Halbscheibe oder dgl. zu verwenden, die beispielsweise den unteren Querschnitt der Trommel ausfüllt, um so das dort lagerende Gut zu erfassen und bei Bedarf in die nächst daran anschliessende Behandlungsstation zu befördern.

Diese Ausführung hat den Vorteil, dass die Zuführungen zu den einzelnen Behandlungsstationen durch die obere Hälfte der Trommel durchgeführt werden können.

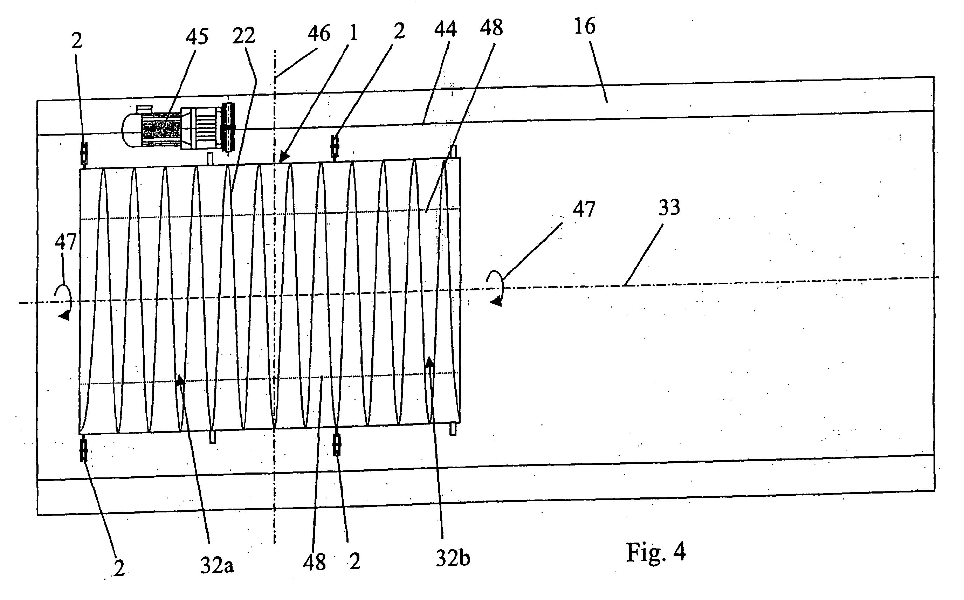

Die Figur 4 zeigt weitere Einzelheiten der Anordnung der Transportwendel 32 in der Trommel 1.

Die gesamte Anordnung ist hierbei in einem Gestell 16 angeordnet, an dem ein oder mehrere Führungsschienen 44 angeordnet sind, an denen ein oder mehrere Verschiebeantriebe 44 für die einzelnen Behandlungsköpfe 28 - 31 vorgesehen sind.

Auf diese Weise kann der jeweilige Behandlungskopf 28 - 31 mittels des Verschiebeantriebes 45 in jede beliebige Behandlungskammer 7 - 13 im Innenraum der Trommel 1 gefahren werden.

Die Welle 33 der Transportwendel 32 wird im übrigen in Pfeilrichtung 47 angetrieben.

Die Darstellung in Figur 4 zeigt auch schematisiert, dass nicht nur eine Transportwendel vorhanden sein kann, sondern dass auch zwei oder mehrere Transportwendeln 32a, 32b vorhanden sein können.

Beispielsweise erstreckt sich die erste Transportwendel 32a von der Eingangsseite der Trommel 1 bis etwa zum Mittenbereich, dort wo die Teilungsebene 46 angedeutet ist.

Ab dieser Teilungsebene in Richtung zum Auslauf der Trommel schließt sich eine weitere Transportwendel 32b an, wobei die beiden Transportwendeln 32a, 32b jeweils in den Pfeilrichtungen 47 auch mit unterschiedlichem Drehantrieb, unterschiedlicher Geschwindigkeit angetrieben werden können.

Ebenso ist es möglich, die insgesamt durchlaufende Transportwendel 32 oder auch die einzelnen Transportwendeln 32a, 32b mit unterschiedlichen Steigungen der Wendel auszubilden, um so die die Größe der Behandlungskammern im Innenraum der Trommel 1 zu variieren.

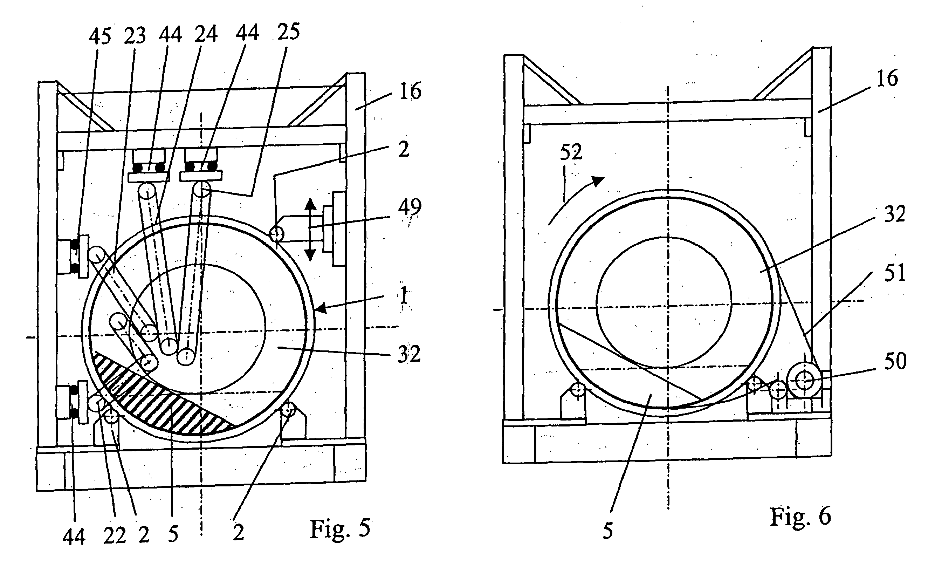

Die Figur 5 zeigt die Auslaufseite der Trommel. Es ist ersichtlich, dass mehrere Führungsschienen 44 mit zugeordneten Verschiebeantrieben 45 vorgesehen sind und die vorher erwähnten Versorgungsleitungen 22 -25 mit den zugeordneten Behandlungsköpfen 28, 31 frei im Innenraum der Trommel 1 verfahrbar sind.

Ebenso ist dargestellt, dass der Außenumfang der Trommel auf den Rollenlagern 2 lagert, wobei ein oberes Rollenlager 2 in den Pfeilrichtungen 49 einstellbar ausgebildet sein kann.

Ebenso ist das sich schräg einstellende Produktbett des Produktes 5 dargestellt, wenn die Trommel beispielsweise in Pfeilrichtung 52 drehend angetrieben ist.

Ein solcher Drehantrieb ist in Figur 6 dargestellt. Er besteht im Wesentlichen aus einem Zahnriemen 51, der über den Außenumfang der Trommel 1 geschlungen ist und der über einen Antriebsmotor 50 und ggf. über ein Getriebe und zugeordnete Spann- und Umlenkrollen führt.

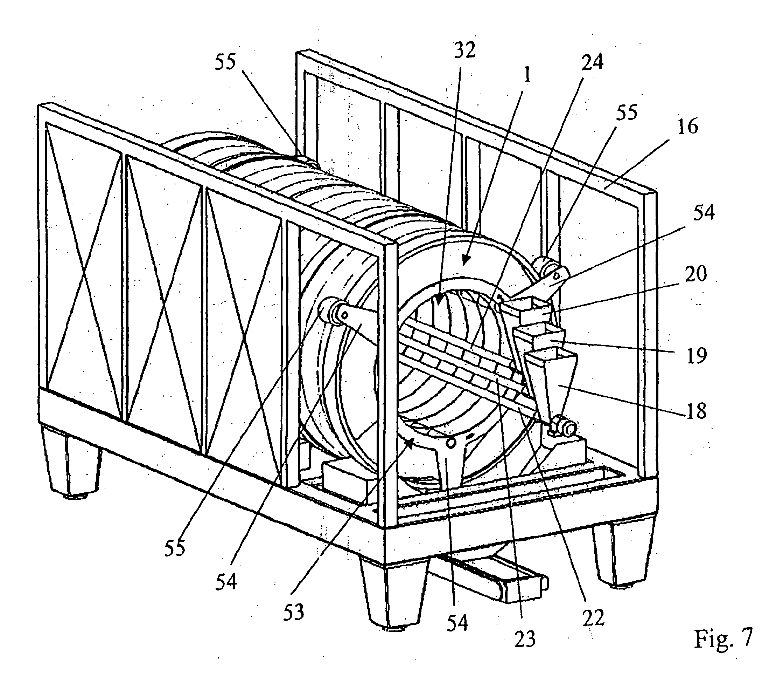

Der Drehantrieb der Transportwendel 32 wird anhand der Figuren 7, 8 und 9 näher dargestellt.

Zunächst zeigt die Figur 4, dass zur gegenseitigen Stabilisierung der einzelnen Wendeln der Transportwendel diese durch etwa in axialer Richtung verlaufende Abstützbleche 48 abgestützt sein können, um die Transportwendel 32 stabil und durchbiegungssicher zu machen.

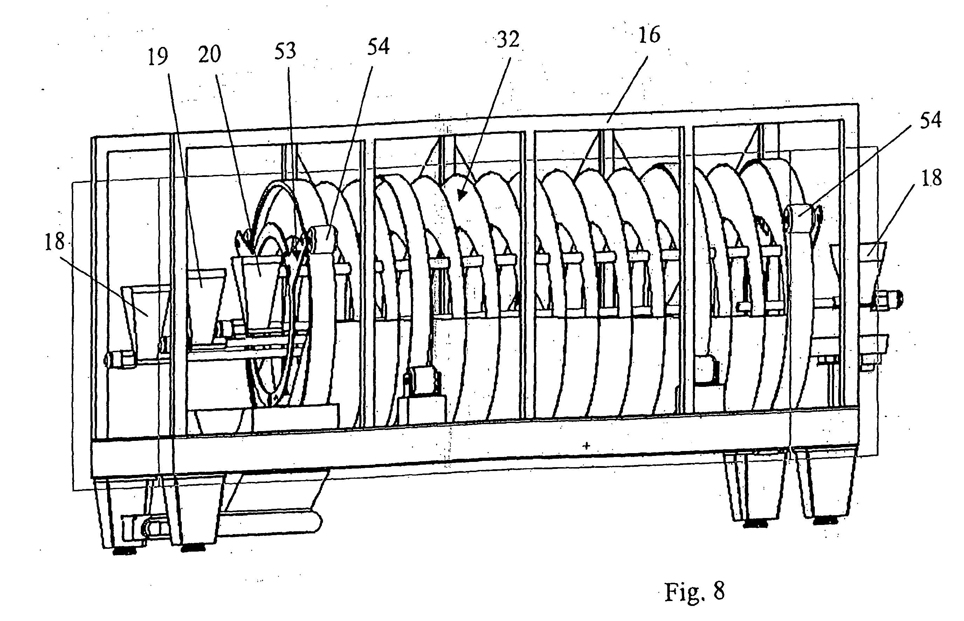

Die Figuren 7 und 8 zeigen, dass - im Gegensatz zur zentralen Lagerung nach Figur 2 - die Transportwendel 32 nun an jeweils einem stirnseitig an der Trommel sich abwälzenden Lagerstern 53 gelagert ist. Der Lagerstern 53 besteht aus drei gleichmäßig am Umfang verteilt angeordneten und radial auswärts gerichteten Armen 54, an deren äußeren, freien Enden jeweils eine Rolle 55 ansetzt, die sich am Außenumfang der Trommel 1 anlegt. Der Lagerstern 53 ist hierbei drehfest mit der Transportwendel 32 verbunden.

Der Vorteil dieser Lagerung ist, dass der Innenraum der Trommel 1 vollkommen von Einbauten (wie beispielsweise der Welle 33) freigehalten wird und dadurch es noch einfacher ist, die Behandlungsvorrichtung 15 mit ihren unterschiedlichen Behandlungsköpfen 28 - 31 im Innenraum der Trommel 1 zu verfahren, um individuell verschiedene Behandlungskammern 7 - 13 beaufschlagen zu können.

Die Figur 8 zeigt hierbei die Anordnung der Transportwendel, wobei der besseren Übersichtlichkeit halber die Trommel nicht gezeichnet ist.

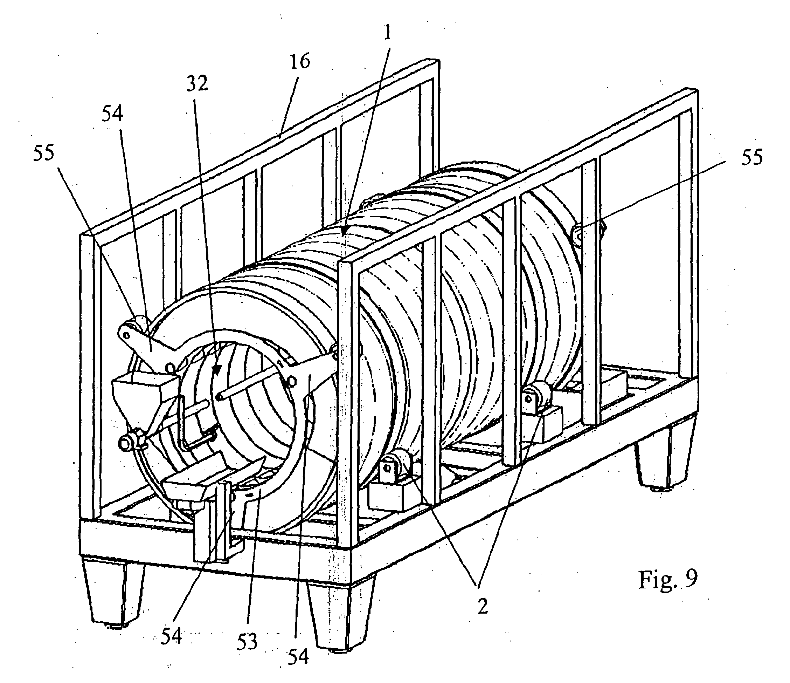

Die Figur 9 zeigt hierbei eine gedrehte perspektivische Ansicht im Vergleich zu Figur 7.

Es gibt auch eine zeichnerisch nicht dargestellte Abweichung zu dem vorher erwähnten Lagerstern 53 mit einer zentralen Lagerung der Transportwendel 32 mit der beschriebenen Welle 33. Die Welle 33 ist hierbei in jeweils stirnseitig angeordneten Lagern 34 aufgenommen, wobei diese Lager 34 an einem gehäusefesten Halter angeordnet sind.

Ebenso sind die der Drehlagerung der Trommel dienenden Rollenlager 2 an einem gehäusefesten Gestell angeordnet.

Es ist selbstverständlich auch möglich, die Förderrichtung des Längsförderers 3 in Pfeilrichtung 4 umzukehren und das Produkt von der Auslaufseite hin in Richtung zur Einlaufseite zu fördern.

Diese Umkehrung der Förderrichtung kann auch während des laufenden Behandlungsprozesses vorgenommen werden.

Ebenso ist es vorgesehen, die Fördergeschwindigkeit zu verändern, wenn dies zwischen einzelnen Bearbeitungsschritten erforderlich ist.

Die Ausbildung des Längsförderers als Transportwendel macht die Anordnung besonders einfach. Die Transportwendel ist leicht auswechselbar und kann gegen andere Transportwendeln (z. B. größerer Steigung) ausgetauscht werden. Auf diese Weise ist es möglich, statt der in Figur 1 dargestellten dreizehn Behandlungskammern nur beispielsweise fünf oder sechs Behandlungskammern zu bilden, die jedoch ein größeres Aufnahmevermögen haben.

Ebenso ist es möglich, durch entsprechende Wahl der Steigung der Transportwendel nur funktionell zwei voneinander getrennte Behandlungskammern in der Trommel auszubilden.

Statt des Drehantriebes der Transportwendel kann auch ein Längsförderer verwendet werden, der einen Verschiebeantrieb ausbildet, so wie es in Figur 3 dargestellt ist.

### Zeichnungs-Legende

- 1.: Trommel
- 2.: Rollenlager
- 3.: Längsförderer
- 4.: Pfeilrichtung
- 5.: Produkt
- 6.: Einführband
- 7.: Behandlungskammer
- 8.: Behandlungskammer
- 9.: Behandlungskammer
- 10.: Behandlungskammer
- 11.: Behandlungskammer
- 12.: Behandlungskammer
- 13.: Behandlungskammer
- 14.: Behälter
- 15.: Behandlungsvorrichtung
- 16.: Gestell
- 17.: Fahrwagen
- 18.: Silobehälter
- 19.: Silobehälter
- 20.: Silobehälter
- 21.: Silobehälter
- 22.: Versorgungsleitung
- 23.: Versorgungsleitung
- 24.: Versorgungsleitung
- 25.: Versorgungsleitung
- 26.: Behandlungskopf
- 27.: Sprühkegel
- 28.: Behandlungskopf
- 29.: Behandlungskopf
- 30.: Behandlungskopf
- 31.: Behandlungskopf
- 32.: Transportwendel 32a, 32b
- 33.: Welle
- 34.: Lager
- 35.: Antrieb
- 36.: Getriebe
- 37.: Trommelboden
- 38.: Drehspalt
- 39.: Wendel spitze 39a- e
- 40.: Scheibenförderer
- 41.: Pfeilrichtung
- 42.: Scheibe
- 43.: Verbindungsstrang
- 44.: Führungsschiene
- 45.: Verschiebeantrieb
- 46.: Teilungsebene
- 47.: Pfeilrichtung
- 48.: Abstützblech
- 49.: Einstellrichtung
- 50.: Antriebsmotor
- 51.: Zahnriemen
- 52.: Pfeilrichtung
- 53.: Lagerstern
- 54.: Arm
- 55.: Rolle

## Patentansprüche

1. Verfahren zum kontinuierlichen Beschichten von Kernen mit einer Dragiervorrichtung, die aus mindestens einer drehend angetriebenen Trommel (1; 91) besteht, in der das Produkt (5) mit einer oder mehreren Überzugsmassen beschichtet oder anderen Behandlungsvorgängen unterzogen wird, wie zum Beispiel Sprühen, Trocknen und dgl., wobei die Charge des zu verarbeitenden Produktes (5) an der Eingangsseite der Trommel (1; 91) in einzelne Einzelchargen aufgeteilt und durch taktweises Fördern durch die Trommel (1; 91) hindurch gefördert wird und in einzelnen, voneinander getrennten Behandlungskammern (7-13; 72-74) in der Trommel (1; 91) behandelt wird, wobei ferner die zu beschichtenden Kerne des Produkts (5) in einzelnen, in axialer Richtung der Trommel (1; 91) voneinander getrennten Behandlungskammern (7-13; 72-74) jeweils mindestens einem Bearbeitungsschritt unterzogen werden und das Produkt (5) jeweils in einer Behandlungskammer (7-13; 72-74) taktweise von der einen Behandlungskammer (7-13; 72-74) in die daran anschließende, weitere Behandlungskammer (7-13; 72-74) gefördert wird **dadurch gekennzeichnet, dass** die Förderung des Produktes (5) von der einen Behandlungskammer (7-13; 72-74) in die nächste durch einen in axialer Richtung der Trommel (1; 91) getaktet fördernden Längsförderer (3, 32, 40) erfolgt, dessen Drehbewegung von der Drehbewegung der Trommel (1; 91) entkoppelt ist.

2. Verfahren nach Anspruch 1, **dadurch gekennzeichnet, dass** die Bearbeitungsschritte "Besprühen", "Bepudern", "Verteilung der Überzugsmateralien" und "Trocknen" sind.

3. Verfahren nach einem der Ansprüche 1 oder 2, **dadurch gekennzeichnet, dass** das Volumen der einzelnen Bearbeitungskammern (7-13; 72-74) einstellbar ist.

4. Verfahren nach einem der Ansprüche 1 bis 3, **dadurch gekennzeichnet, dass** die axiale Länge der einzelnen Bearbeitungskammer (7-13; 72-74) einstellbar ist.

5. Verfahren nach einem der Ansprüche 1 bis 4, **dadurch gekennzeichnet, dass** die Fördergeschwindigkeit des Produktes (5) einstellbar ist.

6. Vorrichtung zum kontinuierlichen Beschichten von Kernen mit einer Dragiervorrichtung, die aus mindestens einer drehend angetriebenen Trommel (1; 91) besteht, in der das Produkt (5) mit einer oder mehreren Überzugsmassen beschichtet oder anderen Behandlungsvorgängen unterzogen wird, wie zum Beispiel Sprühen, Trocknen und dgl., **dadurch gekennzeichnet, dass** in der Trommel (1; 91) mindestens ein Längsförderer (3, 32, 40) angeordnet ist, der das Produkt (5) in kleinere Einzelchargen aufgeteilt, taktweise in axialer Richtung durch die Trommel (1; 91) fördert und dessen, Drehbewegung von der Drehbewegung der trommel entkoppelt ist.

7. Vorrichtung nach Anspruch 6, **dadurch gekennzeichnet, dass** die Förderglieder des Längsförderers (3, 32, 40) die einzelnen Behandlungskammern (7,13; 72-74) in Verbindung mit der Innenwand (66) der Trommel (1; 91) bilden.

8. Vorrichtung nach Anspruch 6 oder 7 zur Ausführung des Verfahrens nach einem der Ansprüche 1 bis 6, **dadurch gekennzeichnet, dass** der Längsförderer (3, 32, 40) als drehend angetriebene Transportwendel (32) ausgebildet ist.

9. Vorrichtung nach einem der Ansprüche 6 bis 8 zur Ausführung des Verfahrens nach einem der Ansprüche 1 bis 6, **dadurch gekennzeichnet, dass** der Längsförderer (3, 32, 40) als Förderkette (40) ausgebildet ist.

10. Vorrichtung nach Anspruch 8, **dadurch gekennzeichnet, dass** mehrere, unabhängig voneinander angetriebene Transportwendeln (32a, 32b) in der Trommel (1; 91) angeordnet sind.

11. Vorrichtung nach einem der Ansprüche 6 bis 10, **dadurch gekennzeichnet, dass** der Außenumfang des Längsförderers (3, 32, 40) einen in radialer Richtung gerichteten Drehspalt (38) in Bezug auf den Innenumfang der Trommel (1, 91) bildet, der kleiner als der Durchmesser der zu beschichtenden Kerne (5) ist.

## Claims

1. Method for the continuous coating of cores with a dragée-making device, which consists of at least one rotatably driven drum (1; 91), in which the product (5) is coated with one or more coating masses or is subjected to other treatment processes, such as, for example, spraying, drying and the like, wherein the batch of the product (5) to be processed is in each case divided into individual single batches at the input side of the drum (1; 91) and is conveyed through the drum (1; 91) by conveying in a clocked manner and is treated in individual treatment chambers (7 to 13; 72 to 74), which are separated from one another, in the drum (1; 91), wherein the cores, which are to be coated, of the product (5) are also subjected in individual treatment chambers (7 to 13; 72 to 74), which are separated from one another in the axial direction of the drum (1; 91), to at least one respective treatment step and the product (5) in a respective treatment chamber (7 to 13; 72 to 74) is conveyed in a clocked manner from one treatment chamber (7 to 13; 72 to 74) into the further treatment chamber (7 to 13; 72 to 74) adjoining it, **characterised in that** the product (5) is conveyed from one treatment chamber (7 to 13; 72 to 74) into the next by a longitudinal conveyor (3, 32, 40) conveying in a clocked manner in the axial direction of the drum (1; 91), the rotary movement of said longitudinal conveyor being decoupled from the rotary movement of the drum (1; 91).

2. Method according to claim 1, **characterised in that** the treatment steps are "spraying", "powdering" , "distribution of the coating materials" and "drying".

3. Method according to either of claims 1 or 2, **characterised in that** the volume of the individual treatment chambers (7 to 13; 72 to 74) can be adjusted.

4. Method according to any one of claims 1 to 3, **characterised in that** the axial length of the individual treatment chambers (7 to 13; 72 to 74) can be adjusted.

5. Method according to any one of claims 1 to 4, **characterised in that** the conveying speed of the product (5) can be adjusted.

6. Device for the continuous coating of cores with a dragée-making device, which consists of at least one rotatably driven drum (1; 91), in which the product (5) is coated with one or more coating masses or subjected to other treatment processes, such as, for example, spraying, drying and the like, **characterised in that** at least one longitudinal conveyor (3, 32, 40) is arranged in the drum (1; 91) which longitudinal conveyor conveys the product (5), divided into smaller individual batches, in a clocked manner in the axial direction through the drum (1; 91), and the rotary movement of which is decoupled from the rotary movement of the drum.

7. Device according to claim 6, **characterised in that** the conveying members of the longitudinal conveyor (3, 32, 40) form the individual treatment chambers (7, 13; 72 to 74) in conjunction with the inner wall (66) of the drum (1; 91).

8. Device according to claim 6 or 7 for carrying out the method according to any one of claims 1 to 5, **characterised in that** the longitudinal conveyor (3, 32, 40) is configured as a rotatably driven spiral conveyor (32).

9. Device according to any one of claims 6 to 8 for carrying out the method according to any one of claims 1 to 5, **characterised in that** the longitudinal conveyor (3, 32, 40) is configured as a chain conveyor.

10. Device according to claim 8, **characterised in that** a plurality of spiral conveyors (32a, 32b) driven independently of one another is arranged in the drum (1; 91).

11. Device according to any one of claims 6 to 10, **characterised in that** the outer periphery of the longitudinal conveyor (3, 32, 40) forms a rotating gap (38) directed in the radial direction in relation to the inner periphery of the drum (1, 91), which is smaller than the diameter of the cores (5) to be coated.

## Revendications

1. Procédé d'enrobage continu de noyaux à l'aide d'un dispositif de dragéification qui se compose d'au moins un tambour (1 ; 91) entraîné en rotation dans lequel le produit (5) est enrobé avec une ou plusieurs masses de recouvrement ou est soumis à d'autres traitements, comme par exemple une pulvérisation, un séchage, etc., étant précisé que la charge du produit à traiter (5) est divisée sur le côté entrée du tambour (1 ; 91) en charges individuelles, traverse le tambour (1 ; 91) grâce à un acheminement synchronisé et est traitée dans des chambres de traitement individuelles (7-13 ; 72-74) séparées les unes des autres dans le tambour (1 ; 91), et étant précisé par ailleurs que les noyaux du produit (5) qui doivent être enrobés sont soumis dans chacune des chambres de traitement individuelles (7-13 ; 72-74) séparées les unes des autres dans le sens axial du tambour (1 ; 91) à au moins une phase de traitement, et que le produit (5) qui se trouve à chaque fois dans une chambre de traitement (7-13 ; 72-74) est acheminé de manière synchronisée de cette chambre (7-13 ; 72-74) vers la chambre de traitement (7-13 ; 72-74) voisine, **caractérisé en ce que** l'acheminement du produit (5) d'une chambre de traitement (7-13 ; 72-74) vers la suivante se fait grâce à un convoyeur longitudinal (3, 32, 40) qui réalise l'acheminement de manière synchronisée dans le sens axial du tambour (1 ; 91) et dont le mouvement rotatif est désolidarisé du mouvement rotatif du tambour (1 ; 91).

2. Procédé selon la revendication 1, **caractérisé en ce que** les phases de traitement consistent en une "pulvérisation", un "poudrage", une "répartition des matériaux de recouvrement" et "un séchage".

3. Procédé selon l'une des revendications 1 ou 2, **caractérisé en ce que** le volume des chambres de traitement individuelles (7-13 ; 72-74) est réglable.

4. Procédé selon l'une des revendications 1 à 3, **caractérisé en ce que** la longueur axiale des chambres de traitement individuelles (7-13 ; 72-74) est réglable.

5. Procédé selon l'une des revendications 1 à 4, **caractérisé en ce que** la vitesse d'acheminement du produit (5) est réglable.

6. Dispositif d'enrobage continu de noyaux à l'aide d'un dispositif de dragéification qui se compose d'au moins un tambour (1 ; 91) entraîné en rotation dans lequel le produit (5) est enrobé avec une ou plusieurs masses de recouvrement ou est soumis à d'autres traitements, comme par exemple une pulvérisation, un séchage, etc., **caractérisé en ce qu'**il est prévu dans le tambour (1 ; 91) au moins un convoyeur longitudinal (3, 32, 40) qui achemine le produit (5), divisé en charges individuelles plus petites, de manière synchronisée dans le sens axial à travers le tambour (1 ; 91) et dont le mouvement rotatif est désolidarisé du mouvement rotatif du tambour (1 ; 91).

7. Dispositif selon la revendication 6, **caractérisé en ce que** les organes d'acheminement du convoyeur longitudinal (3, 32, 40) forment avec la paroi intérieure (66) du tambour (1 ; 91) les chambres de traitement individuelles (7, 13 ; 72-74).

8. Dispositif selon la revendication 6 ou 7 pour la mise en oeuvre du procédé selon l'une des revendications 1 à 5, **caractérisé en ce que** le convoyeur longitudinal (3, 32, 40) est conçu comme une hélice transporteuse (32) entraînée en rotation.

9. Dispositif selon l'une des revendications 6 à 8 pour la mise en oeuvre du procédé selon l'une des revendications 1 à 5, **caractérisé en ce que** le convoyeur longitudinal (3, 32, 40) est conçu comme un convoyeur à chaîne.

10. Dispositif selon la revendication 8, **caractérisé en ce que** plusieurs hélices transporteuses (32a, 32b) entraînées indépendamment les unes des autres sont disposées dans le tambour (1 ; 91).

11. Dispositif selon l'une des revendications 6 à 10, **caractérisé en ce que** la circonférence extérieure du convoyeur longitudinal (3, 32, 40) forme par rapport à la circonférence intérieure du tambour (1, 91) un interstice de rotation (38), dirigé dans le sens radial, qui est plus petit que le diamètre des noyaux à enrober (5).
